# EUROPEAN PATENT APPLICATION

(11) **EP 3 139 425 A1**
(43) Date of publication of application: **08.03.2017**
(21) Application number: 16186979.7
(22) Date of filing: 02.09.2016
(51) Int. Cl.: H01M 2/26, H01M 10/0585, H01M 10/0587

(54) **METHOD FOR MANUFACTURING RECHARGEABLE BATTERY AND RECHARGEABLE BATTERY MANUFACTURED USING THE SAME**

(30) Priority: 04.09.2015 KR 20150125840
(71) Applicant: Samsung SDI Co., Ltd., Giheung-gu Yongin-si, Gyeonggi-do 17084 (KR)
(72) Inventor: Kim, Cheon-Soo, 17084 Yongin-si, Gyeonggi-do (KR)
(74) Representative: Gulde & Partner

(57) **Abstract**

Disclosed is a method for manufacturing a rechargeable battery, including: stacking at least two electrode assemblies (130, 140); welding lead tabs (150) extending from the electrode assemblies (130, 140); cutting end portions (T) of the welded lead tabs (150); and welding lead terminals to the cut lead tabs (150).

## Description

### BACKGROUND

### Field

The described technology relates generally to a method for manufacturing a rechargeable battery and a rechargeable battery manufactured using the same, and more particularly, to a method that can be used to manufacture a rechargeable battery and a rechargeable battery manufactured using the same.

### Description of the Related Art

Rechargeable batteries have been applied to various industry-wide technical fields due to their merits. They are widely used as an energy source of mobile devices such as digital cameras, cellular phones, laptop computers, and the like. They are also used as an energy source of hybrid electric vehicles that are recommended as a solution for solving air pollution and the like of existing gasoline and diesel internal combustion engines using fossil fuels.

Recently, mobile devices have been released in various forms, so the rechargeable battery mounted on the mobile devices are also required to have various forms. Accordingly, in response to demands associated with shapes of the mobile devices, a new type of electrode assembly, which allows the rechargeable battery to be easily deformed to various shapes in accordance with a shape of the device including the rechargeable battery, has been required.

The above information disclosed in this Background section is only to enhance the understanding of the background of the invention, and therefore it may contain information that does not form the prior art that is already known to a person of ordinary skill in the art.

### SUMMARY OF CERTAIN INVENTIVE ASPECTS

An exemplary embodiment has been made in an effort to provide a method for manufacturing a rechargeable battery that is easily mountable on various devices, and a rechargeable battery manufactured using the same.

In addition, an exemplary embodiment has been made in an effort to provide a method for manufacturing a high quality rechargeable battery regardless of a worker's level of proficiency, and a rechargeable battery manufactured using the same.

An exemplary embodiment provides a method for manufacturing a rechargeable battery, including: stacking electrode assemblies; welding lead tabs formed in the electrode assemblies; cutting end portions of the welded lead tabs; and welding lead terminals to the cut lead tabs.

In welding the lead tabs formed in the electrode assemblies, the end portions of the plurality of lead tabs may be welded while being vertically positioned to extend parallel to each other.

In welding the lead tabs formed in the electrode assemblies, ultrasonic welding may be performed.

In cutting the welded lead tabs, a cutting blade may be vertically moved to cut end portions of the plurality of lead tabs.

The method may include sealing the end portions of the lead terminals in which an insulating layer is formed using a sealing member.

In sealing the end portions of the lead terminals in which the insulating layer is formed using the sealing member, two sealing members may be thermo-bonded after being closely attached to each other.

In stacking the electrode assemblies, one of ends of the electrode assemblies having different planar sizes may be positioned to be vertically parallel to each other.

In stacking the electrode assemblies, the electrode assembly may be any one selected from a wound type and a stacked type.

A rechargeable battery according to an exemplary embodiment includes: at least two electrode assemblies to be stacked; and a plurality of lead tabs drawn out from each of the electrode assemblies. End portions of the plurality of lead tabs are combined to overlap each other.

The electrode assemblies may include a stacked type of electrode assembly and a wound type of electrode assembly, and a plurality of lead tabs may be drawn out from each electrode of the wound type of electrode assembly.

The end portions of the plurality of lead tabs may all be formed to be vertically parallel to each other such that none of them are protruded or depressed.

In the method for manufacturing a rechargeable battery according to the exemplary embodiment, after the lead tabs are welded, parts thereof are cut off. Accordingly, since respective lengths of the lead tabs of the rechargeable having different shapes according to devices do not have to be designed each time, a time for designing the rechargeable battery can be significantly reduced.

In addition, in the method for manufacturing a rechargeable battery according to the exemplary embodiment, the lead tabs can be designed to have sufficient lengths and then be welded. Accordingly, even if a level of proficiency of the worker performing the welding operation is not high, the welding can be performed to connect all the lead tabs.

In addition, the end portions of the lead tabs manufactured by the manufacturing method of the rechargeable battery according to the exemplary embodiment may be aligned in up/down directions. Accordingly, since interference caused by the lead tab protruded while placing the electrode assemblies inside the case, a size of the case can be minimized. Therefore, it can be advantageous in making the size of the rechargeable battery smaller.

### BRIEF DESCRIPTION OF THE DRAWINGS

FIG. 1 is a perspective view of a rechargeable battery that can be manufactured by a manufacturing method of a rechargeable battery according to an exemplary embodiment.
FIG. 2 is a perspective view of the rechargeable battery illustrated in FIG. 1 from which a case is removed.
FIG. 3 is a cross-sectional view of the rechargeable battery illustrated in FIG. 1 taken along the line III-III.
FIG. 4 is a cross-sectional view of the rechargeable battery illustrated in FIG. 1 taken along the line IV-IV.
FIG. 5 is a flowchart sequentially illustrating the manufacturing method of a rechargeable battery according to an exemplary embodiment.
FIGS. 6 to 10 are drawings that sequentially illustrate each step of the method for manufacturing a rechargeable battery.

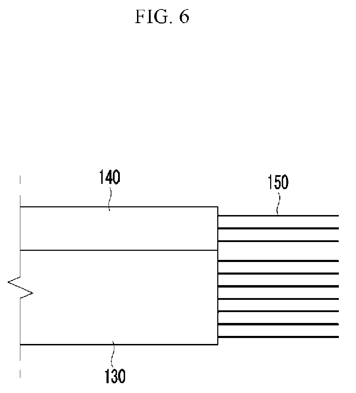

FIG. 6 illustrates a state in which electrode assemblies are stacked.

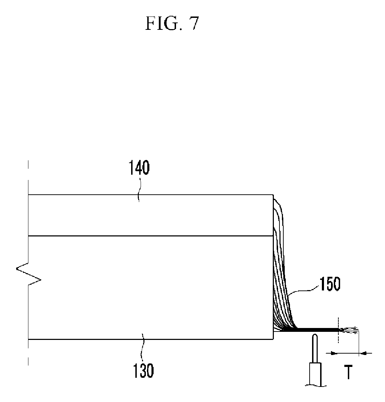

FIG. 7 illustrates a state in which a plurality of lead tabs are welded.

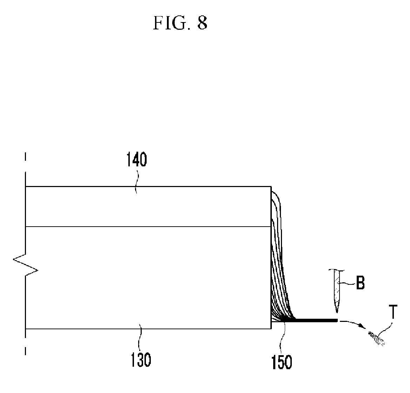

FIG. 8 illustrates a state in which the lead tabs are partially cut off.

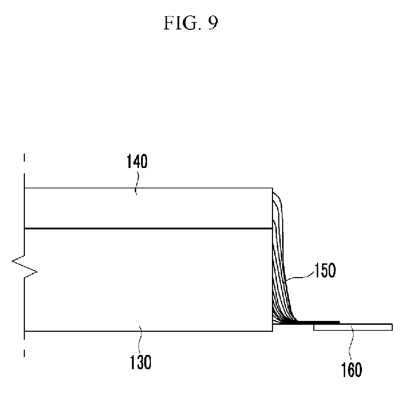

FIG. 9 illustrates a state in which the lead tabs and a lead terminal are connected.

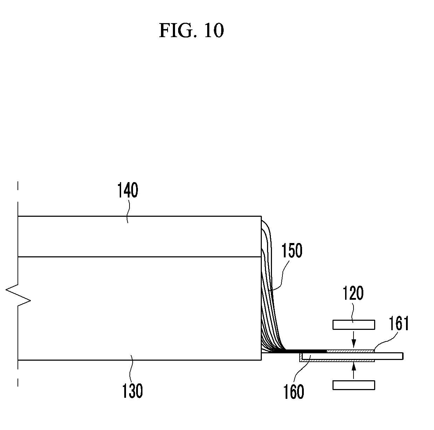

FIG. 10 illustrates a process of thermally sealing the lead terminal with a sealing member.

### DETAILED DESCRIPTION OF CERTAIN INVENTIVE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

The drawings and description are to be regarded as illustrative in nature and not restrictive, and like reference numerals designate like elements throughout the specification.

Further, in exemplary embodiments, for components having the same configuration, like reference numerals are used and described only in a representative embodiment, and in other exemplary embodiments, only different configurations from the representative embodiment will be described.

Throughout this specification and the claims that follow, when it is described that an element is "coupled" to another element, the element may be "directly coupled" to the other element or "indirectly coupled" to the other element through a third element. In addition, unless explicitly described to the contrary, the word "comprise" and variations such as "comprises" or "comprising" will be understood to imply the inclusion of stated elements but not the exclusion of any other elements.

Prior to describing a manufacturing method of a rechargeable battery according to an exemplary embodiment, a structure of a rechargeable battery that can be manufactured by a manufacturing method of a rechargeable battery according to an exemplary embodiment will now be described.

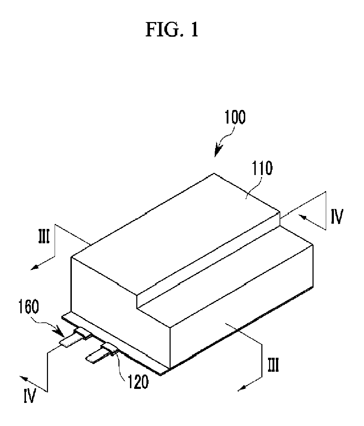

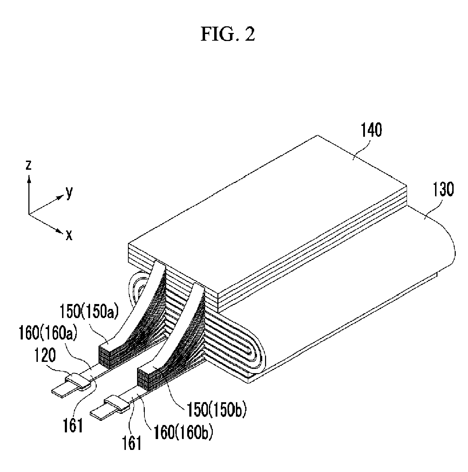

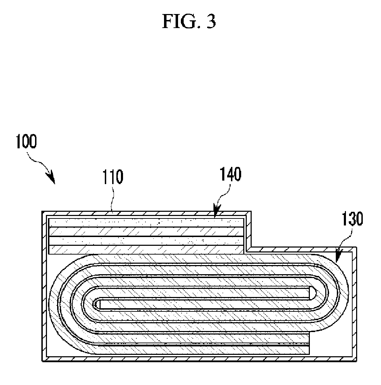

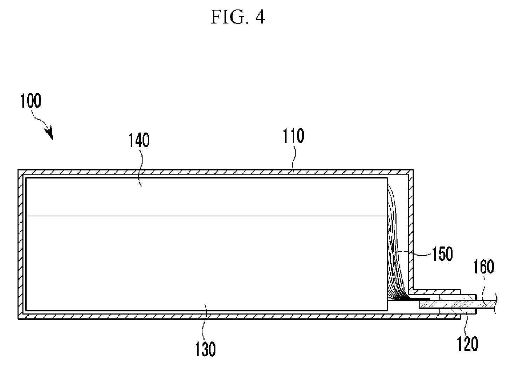

FIG. 1 is a perspective view of a rechargeable battery that can be manufactured by a manufacturing method of a rechargeable battery according to an exemplary embodiment, FIG. 2 is a perspective view of the rechargeable battery illustrated in FIG. 1 from which a case is removed, FIG. 3 is a cross-sectional view of the rechargeable battery illustrated in FIG. 1 taken along the line III-III, and FIG. 4 is a cross-sectional view of the rechargeable battery illustrated in FIG. 1 taken along the line IV-IV.

Referring to FIGS. 1 to 4, the rechargeable battery 100 that can be manufactured by the manufacturing method of a rechargeable battery according to the exemplary embodiment may include electrode assemblies 130 and 140, lead tabs 150, a case 110, a lead terminal 160, and a sealing member 120.

At least a pair of electrode assemblies 130 and 140 may be stacked. The plurality of electrode assemblies 130 and 140 may be stacked while having different planar sizes with respect to each other.

The plurality of lead tabs 150 are drawn out from each of the electrode assemblies 130 and 140. For example, a plurality of positive electrode lead tabs 150a and a plurality of negative electrode lead tabs 150b may be formed in each of the electrode assemblies 130 and 140. Alternatively, one positive electrode lead tab 150a and one negative electrode lead tab 150b may be formed in each of the electrode assemblies 130 and 140.

In the rechargeable battery 100 that can be manufactured by the manufacturing method of a rechargeable battery according to the exemplary embodiment, the plurality of lead tabs 150 are coupled such that their end portions are vertically aligned with respect to each other. That is, end portions of the plurality of lead tabs 150 may be formed such that none of them is protruded or is indented with respect to each other.

Meanwhile, the electrode assemblies 130 and 140 described above may be a stacked type of electrode assembly 130 or a wound type of electrode assembly 140. For example, one of the electrode assemblies 130 and 140 may be a wound type of electrode assembly 130, while the other thereof may be a stacked type of electrode assembly 140.

In this case, as described above, the plurality of lead tabs 150 may be draw out from each electrode of the wound type of electrode assembly 130.

The two electrode assemblies 130 and 140 may be stacked to form the rechargeable battery 100. For example, the wound type of electrode assembly 130 having a relatively larger planar size may be positioned under the stacked type of electrode assembly 140. Alternatively, the opposite case may also be possible.

In addition, the plurality of electrode assemblies 130 and 140 are stacked while they have different planar sizes with respect to each other, and the wound type of electrode assembly 130 (in a z-axis direction of the drawing) may be formed thicker than the stacked type of electrode assembly 140. However, they are not limited thereto, and the opposite case may also be possible.

The wound type of electrode assembly 130 and the stacked type of electrode assembly 140 are illustrated in the drawing such that they have the same lengths in a y-axis direction, but they are not limited thereto. Alternatively, the wound type of electrode assembly 130 and the stacked type of electrode assembly 140 may have different lengths in the y-axis direction. For example, the length of the wound type of electrode assembly 130 in the y-axis direction may be longer than that of the stacked type of electrode assembly 140 in the y-axis direction.

The electrode assemblies 130 and 140 may have, for example, a structure in which a positive electrode (not shown) and a negative electrode (not shown) are positioned while interposing a separator (not shown) therebetween. For example, the separator may be formed as a solid electrolyte film through which lithium ions can pass.

The positive electrode may include a coated region where an active material is coated on a current collector of a thin metal film (e.g., an aluminum sheet), and an uncoated region (not shown) which is formed as an exposed current collector since an active material is not coated thereon. The first lead tab 150a (referred to as a "positive electrode lead tab") may be extended while being connected to the uncoated region of the positive electrode.

The negative electrode may include a coated region where a different active material than the active material of the positive electrode is coated on a current collector of a thin metal film (e.g., a copper sheet), and an uncoated region which is formed as an exposed current collector since an active material is not coated thereon. The second lead tab 150b (referred to as a "negative electrode lead tab") may be extended while being separated from the positive electrode lead tab and connected to the uncoated region of the negative electrode.

The case 110 may include an internal space that is formed in accordance with the electrode assemblies 130 and 140. Since the plurality of electrode assemblies 130 and 140 are stacked to have a step therebetween while having the different planar sizes, the case 110 may also be formed to have a step.

The lead terminal 160 may be connected to the lead tab 150. An insulating layer 161 may be formed at an external surface of the lead terminal 160. The insulating layer 161 may be a polymer layer, for example.

The lead terminal 160 may comprise one end which is exposed and another end which is connected to the lead tab 150. The insulating layer 161 may not be formed at the exposed end of the lead terminal 160.

The sealing member 120 may be formed to partially enclose the lead terminal 160. The sealing member 120 electrically insulates the lead terminal 160 from the case 110.

In the rechargeable battery 100 having the structure as described above, since the electrode assemblies 130 and 140 are formed to have a stepped structure, a mounting space inside a device on which the rechargeable battery 100 is mounted may be used in various ways. In addition, an empty space inside the device may be used to maximize spatial utility. Further, the high-capacity electrode assemblies 130 and 140 may be used in the device, which can be advantageous in making the device smaller.

On the other hand, devices in which the rechargeable battery can be installed may be, for example, mobile phones, laptops, tablets, smartphones, electronic picture frames, light electronic vehicles (LEVs), electric vehicles, hybrid electric vehicles, plug-in hybrid electric vehicles, and power storage devices.

A method for manufacturing a rechargeable battery according to an exemplary embodiment, which can be used to manufacture the rechargeable battery as described above, will now be described.

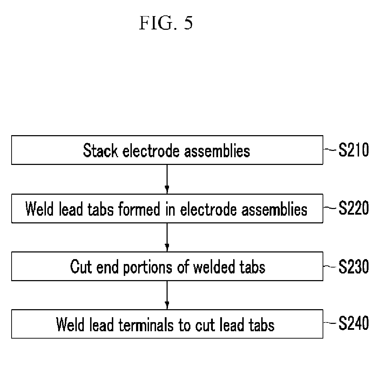

FIG. 5 is a flowchart sequentially illustrating the manufacturing method of a rechargeable battery according to the exemplary embodiment.

Referring to FIG. 5, the manufacturing method of a rechargeable battery according to the exemplary embodiment includes stacking electrode assemblies (S210), welding lead tabs formed in the electrode assemblies (S220), cutting end portions of the welded lead tabs (S230), and welding lead terminals to the cut lead tabs (S240).

Each step of the manufacturing method of a rechargeable battery according to the exemplary embodiment will now be described in detail with reference to the drawings.

FIGS. 6 to 10 are drawings that sequentially illustrate each step of the method for manufacturing a rechargeable battery.

FIG. 6 illustrates a state in which electrode assemblies are stacked.

Referring to FIG. 6, in stacking the electrode assemblies (S210, refer to FIG. 5), the electrode assemblies 130 and 140 having different planar sizes are positioned to have a first end vertically aligned with respect to each other. More specifically, end portions of the electrode assemblies 130 and 140 connected to the lead tabs are arranged to be aligned with each other. In stacking the electrode assemblies (S210, refer to FIG. 5), the electrode assemblies 130 and 140 may be of any type selected from the wound type and the stacked type.

FIG. 7 illustrates a state in which the plurality of lead tabs are welded.

Referring to FIG. 7, in welding the lead tabs formed in the electrode assemblies (S220), the plurality of lead tabs 150 may be welded while being vertically positioned so that end portions thereof extend parallel to each other. In welding the lead tabs formed in the electrode assemblies (S220, refer to FIG. 5), ultrasonic welding may be performed. Accordingly, the lead tabs 150 may be electrically coupled to each other since they are welded together.

Referring back to FIG. 2, in welding the lead tabs formed in the electrode assemblies (S220, refer to FIG. 5), the positive electrode lead tabs 150a may be connected to each other, and the negative electrode lead tabs 150b may be connected to each other.

FIG. 8 illustrates a state in which the lead tabs are partially cut off.

Referring to FIG. 8, in cutting the welded lead tabs (S230, refer to FIG. 5), as an example of cutting the lead tabs 150, a cutting blade B may be vertically moved to cut the end portions T of the plurality of lead tabs 150 to a predetermined length. Due to cutting the welded lead tabs (S230, refer to FIG. 5), the edge portions of the lead tabs 150 are all aligned to each other while none of them has a protruded portion with respect to the other edge portions.

In this case, cutting the welded lead tabs 150 is not necessarily limited to the use of the cutting blade B, and a laser may also be used.

According to a manufacturing method of the prior art, as opposed to the above description, when welding is performed after cutting each of the lead tabs, welding should be performed after the lead tabs are respectively designed to have different lengths in consideration of bending of the lead tabs. Accordingly, since the length of the lead tabs should be designed and manufactured for every rechargeable battery of a different shape, a design time may take longer.

In addition, depending on a level of proficiency of a worker who performs welding work, an end portion of any one lead tab may not be normally welded to the other lead tabs.

Particularly, the lead tabs respectively formed in the stacked type of electrode assembly and in the wound type of electrode assembly may have different lengths. That is, since the lead tabs of the different types of the electrode assemblies may respectively have different lengths, it may be difficult to align and weld the end portions of all the lead tabs.

In addition, when welding is performed after cutting each of the lead tabs, some of the lead tabs may protrude further to the outside than the other lead tabs. Accordingly, since some of the protruded lead tabs may cause interference while installing the electrode assemblies in the case, the case may be designed to have a corresponding size by taking protruded lengths of some of the lead tabs into account. Therefore, it may be disadvantageous in making the size of the rechargeable battery smaller.

However, in the manufacturing method of a rechargeable battery according to the current exemplary embodiment, the lead tabs are first welded and then they are partially cut off. Accordingly, since lead tabs of rechargeable batteries having different shapes do not need to be respectively designed to have a different length, a time for designing the rechargeable battery can be significantly reduced.

In the manufacturing method of a rechargeable battery according to the current exemplary embodiment, the lead tabs are designed to have sufficient lengths. Accordingly, even if a level of proficiency of the worker performing the welding work is not so high, the welding can be performed at end portions of the lead tabs such that all the lead tabs are connected.

In addition, the end portions of the lead tabs manufactured by the manufacturing method of the rechargeable battery according to the exemplary embodiment may all be aligned in a vertical direction. Accordingly, since interference caused by the protruded lead tabs while placing the electrode assemblies in the case is reduced, the size of the case can be minimized. Therefore, it may be advantageous in making the size of the rechargeable battery smaller.

FIG. 9 illustrates a state in which the lead tabs and the lead terminal are connected.

Referring to FIG. 9, in welding the lead terminals to the cut lead tabs (S240, refer to FIG. 5), the lead tab 150 and the lead terminal 160 are closely attached to each other and are then welded. In this case, a top surface of the end portion of the lead terminal 160 may be closely attached to a bottom surface of the end portion of the lead tab 150. Alternatively, a bottom surface of the end portion of the lead terminal 160 may be closely attached to a top surface of the end portion of the lead tab 150.

In this case, as shown in FIG. 2, the positive electrode lead tab 150a may be welded to a positive electrode lead terminal 160a, and the negative electrode lead tab 150b may be welded to a negative electrode lead terminal 160b.

In welding the lead terminal to the cut lead tabs (S240), an ultrasonic welding method may be used, for example, but it is not limited thereto.

FIG. 10 illustrates a process of thermally sealing the lead terminal with a sealing member.

Referring to FIG. 10, the manufacturing method of a rechargeable battery according to the current exemplary embodiment may include sealing the end portions of the lead terminals 160 in which the insulating layer 161 is formed using the sealing member 120. Sealing the end portions of the lead terminals 160 in which the insulating layer 161 is formed using the sealing member 120 may be performed after welding the lead terminal to the cut lead tabs.

In sealing the end portions of the lead terminals 160 in which the insulating layer 161 is formed using the sealing member 120, two sealing members 120 may be closely attached to each other such that they are thermo-bonded. By the process as described above, an empty space can be prevented from being created between the sealing member 120 and the lead terminal 160 as the sealing member 120 and the insulating layer 161 are partially melted. Accordingly, since the sealing member 120 is more closely attached to the lead terminal 160, the lead terminal may provide better sealing reliability.

While this disclosure has been described in connection with what is presently considered to be practical exemplary embodiments, the drawings and the detailed description of the present invention which are described above are merely illustrative, are just used for the purpose of describing the present invention, and are not used for qualifying the meaning or limiting the scope of the present invention, which is disclosed in the appended claims. Therefore, it will be understood by those skilled in the art that various modifications and other equivalent exemplary embodiments may be made from the present invention. Accordingly, an actual technical protection scope of the present invention is to be defined by the appended claims.

## Claims

1. A method for manufacturing a rechargeable battery (100), comprising: stacking at least two electrode assemblies (130, 140); welding lead tabs (150) formed in the electrode assemblies (130, 140); cutting end portions (T) of the welded lead tabs (150); and welding lead terminals (160) to the cut lead tabs (150).

2. The method of claim 1, wherein, in welding the lead tabs (150) formed in the electrode assemblies (130, 140), end portions of the plurality of lead tabs (150) are welded while being vertically positioned to extend parallel to each other.

3. The method of one of the preceding claims, wherein, in welding the lead tabs (150) formed in the electrode assemblies (130, 140), ultrasonic welding is performed.

4. The method of one of the preceding claims, wherein, in cutting the welded lead tabs (150), a cutting blade (B) is vertically moved to cut a part of the end portions of the plurality of lead tabs (150).

5. The method of one of the preceding claims, comprising sealing the end portions of the lead terminals (160) on which an insulating layer (161) is formed using a sealing member (120).

6. The method of claim 5, wherein, in sealing the end portions of the lead terminals (160) on which the insulating layer (161) is formed using the sealing member (120), two sealing members (120) are thermo-bonded after being closely attached to each other.

7. The method of one of the preceding claims, wherein, in stacking the electrode assemblies (130, 140), the at least two electrode assemblies (130, 140) have different planar sizes and are positioned to have a first end vertically aligned with each other.

8. The method of claim 7, wherein the lead tabs (150) extend from the first end of the electrode assembly (130, 140).

9. The method of one of the preceding claims, wherein each electrode assembly (130, 140) is any one selected from a wound type and a stacked type electrode assembly.

10. A rechargeable battery (100) comprising: at least two electrode assemblies (130, 140) stacked on each other; and a plurality of lead tabs (150) extending from the electrode assemblies (130, 140), wherein end portions of the plurality of lead tabs (150) are arranged to overlap each other.

11. The rechargeable battery of claim 10, wherein each electrode assembly (130, 140) comprises a positive electrode, a negative electrode, and a separator interposed therebetween, and
wherein the lead tabs (150) comprise positive electrode lead tabs (150a) electrically connected to the positive electrodes and negative electrode lead tabs (150b) electrically connected to the negative electrodes.

12. The rechargeable battery of one of claims 10 and 11, wherein the electrode assemblies (130, 140) include a stacked type of electrode assembly (140) and a wound type of electrode assembly (130), and a plurality of lead tabs (150) are extending from each electrode of the wound type of electrode assembly.

13. The rechargeable battery of one of claims 10 to 12, wherein the end portions of the plurality of lead tabs (150) are all formed to be vertically aligned with each other such that none of them are protruded or indented with respect to the other end portions.
